**Europäisches Patentamt**

**European Patent Office**

**Office européen des brevets**

(19)

(11) Numéro de publication: **0 258 086**
**B1**

(12) # FASCICULE DE BREVET EUROPEEN

(45) Date de publication du fascicule du brevet:
**17.10.90**

(51) Int. Cl.⁵: **B29C 33/60**, B29C 37/00

(21) Numéro de dépôt: **87401686.8**

(22) Date de dépôt: **17.07.87**

(54) Nouveau procédé pour l'obtention d'autoadhésifs thermofusibles à surface non collante.

(30) Priorité: **21.07.86 FR 8610552**

(43) Date de publication de la demande:
**02.03.88 Bulletin 88/9**

(45) Mention de la délivrance du brevet:
**17.10.90 Bulletin 90/42**

(84) Etats contractants désignés:
**BE DE ES FR GB IT LU NL**

(56) Documents cités:
**WO-A-84/03468**
**DE-A- 1 604 683**
**GB-A- 2 049 542**
**US-A- 2 201 271**
**US-A- 2 269 660**

(73) Titulaire: **CECA S.A., 22, Place des Vosges,**
**F-92400 Courbevoie(FR)**

(72) Inventeur: **Lambert, Jean-Patrick, 5, rue du Maréchal**
**Fayolles, F-60200 Compiègne(FR)**
Inventeur: **Wittmann, Claude, 39, rue Augustin Thierry,**
**F-60200 Compiègne(FR)**

## Description

On décrit un procédé pour le conditionnement des adhésifs thermofusibles autocollants , sous forme de blocs à surface dénuée de tous caractère collant ou poissant.

Les compositions autoadhésives thermofusibles sont industriellement mises en oeuvre à l'aide d'encolleuses qui distribuent les produits sous forme fondue, et dont les réservoirs sont généralement alimentés à partir de blocs ou de pains, en forme le plus souvent de cubes, de parallélépipèdes plus ou moins plats, ou de troncs de pyramide, dont le volume varie de 0,5 à 20 litres environ.

Les adhésifs thermofusibles sont, pour l'essentiel, composés de résines, naturelles ou synthétiques, fusibles, solides à la température ambiante. Les autoadhésifs thermofusibles sont composés de résines du même type, mais formulées de façon à ce que leur surface reste plus ou moins poisseuse à la température ambiante.

Cette pégosité est la caractéristique des adhésifs permanents. Sa contrepartie en est, pour les pains ou blocs d'autoadhésif , leur agglomération lorsqu'ils sont mis en contact sans protection, l'accrochage de toutes sortes de salissures , et un grand désagrément, sinon une certaine insalubrité, dans la manipulation.

Certains adhésifs thermofusibles (hot-melts), tels par exemple, les thermofusibles à long temps de prise, sans être à proprement parler des autocollants, peuvent néanmoins présenter le même phénomène d'autoadhésion avec toute ses conséquences nuisibles.

L'invention porte donc sur tous les adhésifs susceptibles de coller sur eux-mêmes par simple contact, sous pression plus ou moins forte, et notamment les adhésifs formulés à partir de caoutchouc naturel, de caoutchouc SBR, SIS, SBS, SEBS, de polychloroprène, de caoutchouc nitrile, de caoutchouc chloré, de caoutchouc butyle, de polysufures, de polymère éthylène-vinylacétate et de ses copolymères, de polyétheramide, des polymères et copolymères d'α - oléfines, les adhésifs à base de résines collantes naturelles ou artificielles, colophane et esters de colophane, résines de pétrole et de résines de synthèses, plastifiés ou non, les résines indènes-coumarenes, les cires, brais ou bitumes naturels ou modifiés par des résines synthétiques, polyesters, polyamides, polyacryliques etc ...

Tous ces produits ont été, de longue date, conditionnés en blocs, pains ou pavés, éléments individuels ou regroupés en plaquettes d'éléments individuels, emballés à l'aide de feuilles antiadhésives, généralement en papier ou carton siliconé. Un tel emballage sert en outre généralement de moule au cours du façonnage des blocs par coulée de l'adhésif fondu.

On trouve ainsi dans le commerce, des emballages individuels en papier siliconé fort pour blocs cubiques de 1 à plusieurs litres, ou des boîtes en cartons à compartiments multiples (4 à 24) réalisés en papier siliconé, compartiments dont les capacités peuvent varier de ¼ litre à plusieurs litres.

Ces sytèmes, bien que fort répandus présentent un certain nombre d'inconvénients.

Ces moules-emballages perdus sont d'un coût élevé. Leur matière est mauvaise conductrice de la chaleur et de ce fait, le refroidissement des blocs est lent, la reprise et la finition des blocs après leur coulée ne peut se faire qu'après un temps fort long, ce qui ralentit les cadences de fabrication et aggrave le coût des produits conditionnés.

Les blocs, pains, pavés doivent être séparés de leur emballage au moment de leur utilisation, opération d'autant moins aisée et d'autant plus désagréable qu'est grande leur adhésivité de surface.

On a tenté d'apporter d'autres solutions à ce problème de conditionnement des autoadhésifs thermofusibles et des substances analogues, par exemple en les filmant par coextrusion avec une substance réalisant une gaine non collante, ou encore en coulant l'autoadhésif dans un moule métallique préalablement revêtu d'un poudrage et maintenu par voie électrostatique (voir la demande internationale no 84/03468).

Ces procédés, pour intèressants qu'ils soient, sont entre autres critiques en ce qui concerne la finition : non protection des surfaces de coupe des formes extrudées, non protection de la surface supérieure des blocs coulés en moules poudrés. De plus, ces techniques sont mal adaptées à la fabrication d'unités d'autoadhésifs de formes et de volumes variés réclamés par les machines qui en sont chargées.

La demanderesse a réalisé un nouveau mode de fabrication de blocs, pains ou pavés d'autoadhésifs thermofusibles dont la surface est néanmoins dénuée de toute propriété collante à température ambiante, et qui se présentent comme des blocs d'autoadhésifs munis d'un épiderme adhèrent de substance thermofusible non autoadhésive.

Cet épiderme, qui a l'apparence et la consistance d'un voile de non-tissé et qui forme un cocon continu autour du pain d'autoadhésif, est obtenu par pulvérisation à chaud de la matière qui le constitue.

Le procédé de réalisation de tels blocs comprend les étapes suivantes :
- pulvérisation sur les parois latérales et le fond d'un moule, de la substance non-autoadhésive à l'état fondu, sur une épaisseur de 0,3 à 3 millimètres;
- coulée de l'autoadhésif fondu et remplissage du moule ainsi préparé;
- protection de la surface libre par une nouvelle pulvérisation d'adhésif thermofusible non-autoadhésif;
- démoulage du bloc après refroidissement, qui délivre un bloc n'adhérant plus à aucune surface, ni même à un autre bloc de même nature.

Parmi les thermofusibles non collants utilisables pour la réalisation de l'invention, on peut citer, de façon non limitative : les cires, les paraffines, les formes cireuses d'antioxydants, les polymères et copolymères thermofusibles du type éthylène-vinylacétate, les polyéthylènes, les copolymères, éthylène-anhydride maléique , éthylène-acide acrylique, les caoutchoucs naturels, les élastomères synthétiques et toutes les formulations de colles thermofusibles (hot-melts) non auto-adhésives qui en dérivent.

La non-évidence du procédé et du produit obtenu réside, non pas tant dans l'emploi d'un adhésif thermofusible comme épiderme d'isolement anti-adéhsif et comme produit de démoulage ce qui est pour le moins déjà très inhabituel, mais surtout dans la permanence de ce voile protecteur, qui conserve son intégrité et sa fonction, alors que fusible dés 60° C/80° C, il reçoit un liquide à 110° C/180° C avec lequel il est totalement miscible à l'état fondu.

Elle réside également dans la pulvérisation d'un adhésif thermofusible non adhésif. Dans l'industrie, la pulvérisation d'auto-dhésif est un procédé de collage, qui ne s'applique qu'avec des autoadhésifs dont les temps de prise sont suffisamment longs, ce qui n'est pas réalisé avec un adhésif non autocollant : par suite de la pulvérisation,l'adhésif arrive froid sur un support froid et il n'y a pas de possibilité de collage, sauf réactivation ultérieure. Ainsi, la pulvérisation d'un adhésif thermofusible non autocollant, apparaît-elle pour le moins très inhabituelle à l'homme du métier.

Les produits selon l'invention présentent des avantages, qu'on ne retrouve pas, ou qu'on ne trouve pas réunis, dans les produits de l'art antérieur :
- le thermofusible qui constitue l'épiderme du bloc est intimement lié à la matière du bloc; il reste adhérent en totalité et en toute circonstance;
- le thermofusible est totalement compatible à l'état fondu avec l'auto-adhésif; il ne représente que 0,5 à 3 % du poids de l'auto-adhésif lui-même, il n'en modifie pas sensiblement les propriétés de poissant permanent, et ne donne lieu à aucune ségrégation liquide dans les fondoirs, comme peuvent le faire les produits pour gainage par coextrusion;
- les blocs, pains ou pavés issus du procédés selon l'invention présentent toutes les propriétés apparentes des savonnettes, et toutes les opérations et manipulations auxquelles se prètent ces dernières, enrobages complémentaires, gerbages, ensachage, etc ..., leur sont directement applicables.

Il en est de même du procédé d'obtention, qui présente de multiples caractéristiques avantageuses :
- d'être un procédé à moules métalliques indéfiniment réutilisables;
- le refroidissement de la masse moulée dans son moule métallique est relativement rapide, et peut-être au be soin accéléré par refroidissement du moule;
- au démoulage, le moule est libéré de toute la matière de la couche protectrice, et se trouve immédiatement disponible pour un nouveau cycle de moulage;
- les dispositifs courants de coulées pour moulage des adhésifs thermofusibles sont utilisables sans modification pour la mise en oeuvre du procédé selon l'invention;
- tout matériel habituellement utilisé pour l'encollage d'autoadhésif par pulvérisation convient pour la pulvérisation de thermofusibles moyennant pour son adaptation des modifications minimes, sinon aucune modification;
- la matière du cocon protecteur est un thermofusible dont la nature n'est pas foncièrement différente de celle de l'autoadhésif; ce sont souvent des productions communes aux mêmes unités de production, ce qui facilite considérablement les problèmes d'approvisionnement et d'adaptation des spécifications;
- le cocon de thermofusible non adhésif possède une cohésion propre non négligeable dont on peut tirer profit pour enrober des autoadhésifs à faible cohésion interne, qui sans protection, auraient tendance à fluer au stockage; un tel effet n'est certainement pas obtenu avec les protections pulvérulentes.

De plus, on peut formuler très simplement des compositions pour cocon à partir de la composition de l'autoadhésif qu'il protège, selon un principe général qui est d'en éliminer, en partie ou en totalité, les résines responsables de la pégosité, et les plastifiants, ou d'y apporter un surplus de polymères non poissants ou de cires non collantes. On obtient toujours des thermofusibles dont il convient simplement de contrôler la pulvérisabilité. A l'opposé, il n'est pas toujours possible de présenter des compositions de protection sous forme de poudres pour poudrage électrostatique, ou sous forme de films découpables et thermo-soudables.

L'invention sera mieux comprise en suivant les exemples non limitatifs décrits ci-après.

## EXMPLE I

Le matériel spécifique est constitué :
- d'un moule en tôle intérieurement siliconé, en forme de tronc de pyramide à base carrée, le fond étant constitué par la petite base dont le côté est de 10 cm, les parois, de 3 cm de hauteur, faisant avec le fond, un angle ouvert de 120° C;
- un applicateur de pulvérisation, de type Meltex (Fraco ou Nordson) alimenté par un thermofusible de gainage constitué par une formulation "hot-melt" à base éthylène-vinylacétate.

On pulvérise, durant 5 secondes environ, le hot-melt dans le moule, de façon à obtenir une pellicule uniforme qui en recouvre toute la surface, ce qui consomme environ 3 grammes de produit.

Dans le moule ainsi revêtu, on coule maintenant 300 g d'autoadhésif fondu, constitué par une formule à base d'éthylène- vinylacétate et maintenu à une température de 140° C. On abandonne l'ensemble au refroidissement spontané, et quant la surface atteint approximativement la température de 100° C, soit selon les conditions d'ambiance, après 30 minutes à 1 heure, on pulvérise sur la surface libre le même hot-melt que plus haut, pour former l'enveloppe supérieure (environ 0,5 g de hot-melt). Le moule ainsi rempli est abandonné au refroidissement spontané le temps suffisant pour que la masse de l'autoadhésif retourne à la température ambiante.

On démoule le produit qui se présente sous l'aspect d'une savonnette absolument non collante. De telles savonnettes peuvent être rangées, par exemple, par 12, 24 ou 48 en cartons ordinaires, d'où elle peuvent être extraites individuellement après transport et stockage, sans aucune difficulté ni désagrément.

## EXEMPLE II (Contre exemple)

L'autoadhésif de l'exemple I est conditionné dans des barquettes siliconées du commerce, organisées en 6 rangées de 4 alvéoles, d'une contenance de 0,6 litre chacune.

L'autoadhésif est coulé à 140° C à partir d'un tube à 4 orifices permettant de remplir simultanément 4 alvéoles.

Le remplissage complet est effectué par déplacements successifs du carton pour présenter les alvéoles devant les tubes de coulées.

Un stockage temporaire de 8 à 10 heures permet le raffermissement définitif de la masse. On ferme par un couvercle. Ce carton de 24 alvéoles est conditionné et distribué. Pour l'utilisation, il faut démouler le contenu de chaque alvéole, chaque opération délivrant un pain d'environ 600 g, à surface collante, dont la manipulation est malaisée ou désagréable.

### EXEMPLE III

Le matériel et le mode opératoire utilisés sont ceux de l'exemple I, mais le thermofusible constituant le voile de gainage a la composition suivante :
paraffine 68/70 ........................... 33 % en poids
Escorez 5320 (Esso) ........................... 33 % en poids
Evatane 9003 (Atochem) ........................ 34 % en poids
et l'autoadhésif lui-même est une formule pour l'assemblage d'articles d'hygiène féminine, dont la composition est :
Cariflex TR 1102 (Shell) ..................... 25 % en poids
Escorez 5320 (Esso) ........................... 45 % en poids
Shellflex 451 FC (Shell) ..................... 30 % en poids
Composition maintenue à la température de 155° C.

Après coulée de l'autadhésif, on attend que la surface soit revenue à environ 120° C, pour effectuer, comme dans l'exemple, une pulvérisation complémentaire du thermofusible de gainage sur la surface libre.

Les blocs que l'on obtient par ce processus sont conditionnés par 12, 24 ou 48 unités en emballages ordinaires; ils supportent, sans agglomération les conditions ordinaires de transport et de stockage, y compris d'éventuelles expositions à des températures de 40° C à 45° C pendant 24 heures ou plus.

## Revendications

1 - Proccédés pour la fabrication par coulée de blocs de substance autoadhésive à surface dénuée de pouvoir d'antoagglomération sous faible pression, comprenant les étapes de constitution d'une couche protectrice apposée sur les parois d'un moule, coulée de la substance autoadhésive fondue dans le moule ainsi revêtu, refroidissement partiel, constitution d'une couche protectrice sur la surface coulée libre, poursuite du refroidissement partiel, constitution d'une couche protectrice sur la surface coulée libre, poursuite du refroidissement et démoulage du bloc, caractérisé en ce que les couches protectrices sont constituées d'un voile de substance thermofusible non autoadhésive, obtenue par pulvérisation de ladite substance thermofusible non autoadhésive à l'état fondu.

2 - Procédé selon la revendication 1, caractérisé en ce que le voile de thermofusible non autoadhésif est constitué de substances ayant le caractère de colles thermofusibles.

3 - Procédé selon les revendications 1 et 2, caractérisé en ce que le voile de thermofusible non autoadhésif comporte des substances ou des mélanges de substances prises dans le groupe comprenant les paraffines, les cires de pétrole, le polyéthylène, les polymères et copolymères éthylène-vinylacétate-anhydride maléique ou éthylène-acide acrylique, les élastomères naturels ou synthétiques.

4 - Blocs de substance autoadhésive thermofusible à surface non adhérente, caractérisés en ce que ladite surface non adhérente est constituée par un voile de substance thermofusible non auto-adhésive obtenue par pulvérisation de ladite substance thermofusible non autoadhésive à l'état fondu

5 - Blocs de substance autoadhésive thermofuksible selon la revendication 4, caractérisés en ce qu'ils résultent d'un procédé de coulage de la substance autoadhésive á l'état fondu dans un moule préalablement revêtu par pulvérisation d'un voile de thermofusible non adhésif.

6 - Blocs de substance autoadhésive themofusible selon les revendications 4 et 5, caractérisés en ce que le voile de themofusible non autoadhésif comporte des substances prises dans le groupe comprenent les paraffines, les cires de pétrole, le polyethylène, les polymères et copolymères éthylène-vinylacétate, éthylène-anhydride malèique ou éthylène-acide acrylique, les élastomères naturels ou synthétiques.

7 - Blocs de substance autoadhésive thermofusible selon les revendications 4, 5 et 6, caractérisé en ce que le voile de substance thermofusible non autoadhésive représente une mkasse de l'ordre de 0,5 à 3% en poids par rapport à la masse d'autoadhésif à enrober..

## Claims

1. Process for the manufacture by casting of blocks of contact-adhesive substance with surface devoid of capacity for contact cohesion under low pressure, comprising the stages of forming a protective layer applied to the walls of a mould, casting the molten contact-adhesive substance into the mould thus coated, partial cooling, forming a protective layer on the free cast surface, continuation of the partial cooling, forming a protective layer on the free cast surface, continuation of the cooling and demoulding of the block, caracterized in that the protective layers consist of a film of hot-melt substance which is not contact-adhesive, obtained by spraying the said hot-melt substance which is not contact-adhesive in the molten state.

2. Process according to Claim 1, characterized in that the film of hot-melt adhesive which is not contact-adhesive consists of substances having the nature of hot-melt adhesives.

3. Process according to Claims 1 and 2, characterized in that the film of hot-melt adhesive which is not contact-adhesive includes substances or mixtures of substances taken from the group comprising paraffins, petroleum waxes, polyethylene, ethylene-vinyl acetate-maleic anhydride or ethylene-acrylic acid polymers and copolymers and natural or synthetic elastomers.

4. Blocks of hot-melt contact-adhesive substance with nonadherent surface, which are characterized in that the said nonadherent surface consists of a film of hotmelt substance which is not contact-adhesive, obtained by spraying the said hot-melt substance which is not contact-adhesive in the molten state.

5. Blocks of hot-melt contact-adhesive substance according to Claim 4, which are characterized in that they result from a process of casting the contact-adhesive substance in the molten state into a mould which is coated beforehand by spraying a film of nonadhesive hot-melt adhesive.

6. Blocks of hot-melt contact-adhesive substance according to Claims 4 and 5, which are characterized in that the film of hot-melt adhesive which is not contact-adhesive includes substances taken from the group comprising paraffins, petroleum waxes, polyethylene, ethylene-vinyl acetate, ethylene-maleic anhydride or ethylene-acrylic acid polymers and copolymers and natural or synthetic elastomers.

7. Blocks of hot-melt contact-adhesive substance according to Claims 4, 5 and 6, which are characterized in that the film of hot-melt substance which is not contact-adhesive represents a mass of the order of 0.5 to 3% by weight relative to the mass of contact adhesive to be coated.

**Patentansprüche**

1. Verfahren zur Gießherstellung von Blöcken aus einer selbstklebenden Substanz mit einer Oberfläche, die von der Neigung zur Selbstagglomeration unter geringem Druck befreit ist, umfassend die Stufen Bildung einer Schutzschicht, die auf den Wänden einer Form aufgebracht ist, Gießen der selbstklebenden, geschmolzenen Substanz in die so ausgekleidete Form, teilweise Abkühlung, Bildung einer Schutzschicht auf der gegossenen freien Oberfläche, anschließend teilweise Abkühlung, Bildung einer Schutzschicht auf der gegossenen freien Oberfläche, anschließend Abkühlung und Herausnahme des Blocks, dadurch gekennzeichnet, daß die Schutzschichten aus einem Schleier einer wärmeschmelzbaren, nicht selbstklebenden Substanz bestehen, der durch Versprühen dieser wärmeschmelzbaren, nicht selbstklebenden Substanz im geschmolzenen Zustand erhalten wird.

2. Verfahren nach Anspruch 1, dadurch gekennzeichnet, daß der wärmeschmelzbare, nicht selbstklebende Schleier aus Substanzen besteht, die den Charakter eines wärmeschmelzbaren Klebstoffs haben.

3. Verfahren nach den Ansprüchen 1 und 2, dadurch gekennzeichnet, daß der wärmeschmelzbare, nicht selbstklebende Schleier Substanzen oder Mischungen von Substanzen aufweist, die aus der die Paraffine, die Petrolwachse, das Polyethylen, die Ethylen-Vinylacetat-Maleinsäureanhydrid- oder Ethylen-Acrylsäurepolymere und Copolymere, die natürlichen oder synthetischen Elastomere umfassenden Gruppe ausgewählt sind.

4. Blöcke aus einer selbstklebenden, wärmeschmelzbaren Substanz mit nicht haftender Oberfläche, dadurch gekennzeichnet, daß diese nicht haftende Oberfläche aus einem Schleier einer wärmeschmelzbaren, nicht selbstklebenden Substanz besteht, die durch Versprühen dieser wärmeschmelzbaren, nicht selbstklebenden Substanz im geschmolzenen Zustand erhalten wird.

5. Blöcke aus einer selbstklebenden, wärmeschmelzbaren Substanz nach Anspruch 4, dadurch gekennzeichnet, daß sie das Ergebnis eines Gießprozesses der selbstklebenden Substanz im geschmolzenen Zustand in eine zuvor durch Versprühen eines wärmeschmelzbaren, nicht klebenden Schleiers ausgekleidete Form sind.

6. Blöcke aus einer selbstklebenden, wärmeschmelzbaren Substanz nach den Ansprüchen 4 und 5, dadurch gekennzeichnet, daß der wärmeschmelzbare, nicht selbstklebende Schleier Substanzen aufweist, die aus der die Paraffine, die Petrolwachse, das Polyethylen, die Ethylen-Maleinsäureanhydrid- oder Ethylen-Acrylsäurepolymere und Copolymere, die natürlichen oder synthetischen Elastomere umfassenden Gruppe ausgewählt sind.

7. Blöcke aus einer selbstklebenden, wärmeschmelzbaren Substanz nach den Ansprüchen 4, 5 und 6, dadurch gekennzeichnet, daß der Schleier einer wärmeschmelzbaren, nicht selbstklebenden Substanz eine Masse in der Größenordnung von 0,5 bis 3 Gew.-%, bezogen auf die zu umhüllende selbstklebende Masse, aufweist.